# EUROPÄISCHE PATENTANMELDUNG

(11) **EP 4 015 282 A2**
(43) Veröffentlichungstag der Anmeldung: **22.06.2022**
(21) Anmeldenummer: 21206120.4
(22) Anmeldetag: 26.03.2018
(51) Int. Cl.: B60L 15/20, B60L 50/10

(54) **VERFAHREN ZUM KOMPENSIEREN VON LEERLAUFVERLUSTEN IN EINEM HYBRIDELEKTROFAHRZEUG, COMPUTERPROGRAMMPRODUKT, DATENTRÄGER UND HYBRIDELEKTROFAHRZEUG**

(30) Priorität: 06.04.2017 DE 102017205871
(62) Teilanmeldung aus: 18716924.8
(71) Anmelder: Volkswagen Aktiengesellschaft, 38440 Wolfsburg (DE)
(72) Erfinder: Anis, Dr. Michael, 38448 Wolfsburg (DE); Wrede, Rainer, 38440 Wolfsburg (DE)
(74) Vertreter: Bals & Vogel Patentanwälte PartGmbB

(57) **Zusammenfassung**

Die vorliegende Erfindung betrifft ein Verfahren zum Kompensieren von Leerlaufverlusten in einem Hybridelektrofahrzeug (1000a) mit einer ersten Antriebseinheit (20) in Form einer elektrischen Maschine, die für einen Antrieb des Hybridelektrofahrzeugs (1000a) durch wenigstens eine Batterie (50) des Hybridelektrofahrzeugs (1000a) mit Strom versorgt wird, sowie einer zweiten Antriebseinheit (30; 40) zum Antreiben des Hybridelektrofahrzeugs (1000a), wobei die Leerlaufverluste an der ersten Antriebseinheit (20) in einem Leerlaufbetrieb der ersten Antriebseinheit (20), in welchem die erste Antriebseinheit (20) weder ein positives noch ein negatives Moment stellen soll, abhängig von prädiktiven Streckendaten und Fahrzeugdaten des Hybridelektrofahrzeugs (1000a) unterschiedlich kompensiert werden. Die Erfindung betrifft ferner ein Computerprogrammprodukt (10) zum Durchführen des erfindungsgemäßen Verfahrens, einen Datenträger (100), auf welchem das Computerprogrammprodukt (10) gespeichert ist sowie ein Hybridelektrofahrzeug (1000a).

## Beschreibung

Die vorliegende Erfindung betrifft ein Verfahren zum Kompensieren von Leerlaufverlusten in einem Hybridelektrofahrzeug mit einer ersten Antriebseinheit in Form einer elektrischen Maschine sowie einer zweiten Antriebseinheit zum Antreiben des Hybridelektrofahrzeugs. Die Erfindung betrifft ferner ein Computerprogrammprodukt sowie einen Datenträger mit einem darauf gespeicherten Computerprogrammprodukt. Außerdem betrifft die Erfindung ein Hybridelektrofahrzeug mit einer ersten Antriebseinheit in Form einer elektrischen Maschine sowie einer zweiten Antriebseinheit zum Antreiben oder Verzögern des Hybridelektrofahrzeugs.

Aus der DE 10 2013 112 388 A1 ist ein Hybridelektrofahrzeug mit einem Verbrennungsmotor und mehreren Generatoren sowie Elektromotoren für einen seriellen oder parallelen Betriebsmodus bekannt. In der DE 10 2013 12 388 A1 wird insbesondere ein Antriebsstrang eines Hybridelektrofahrzeugs beschrieben, der als hybridisierter Antriebsstrang für mehrere verschiedene Antriebsmaschinen ausgeführt ist. In verschiedenen Betriebszuständen des Antriebsstrangs kommen eine Brennkraftmaschine sowie mindestens eine elektrische Maschine zum Einsatz. Diese Maschinen sind je nach Betriebszustand unterschiedlich eingebunden bzw. angekuppelt. Die Maschinen werden in verschiedenen Betriebszuständen einzeln oder in Gruppen funktional in den Antriebsstrang eingebunden. Die Betriebszustände sind an die jeweiligen Anforderungen des Fahrbetriebs des Hybridelektrofahrzeugs angepasst. Dabei können die eine oder die mehreren elektrischen Maschinen sowohl als Antriebsmotoren als auch als Stromgeneratoren betrieben werden. Weiterhin betrifft die vorliegende Erfindung ein geeignetes Verfahren zum Betrieb des Antriebstrangs. Demnach gehen aus der DE 10 2013 112 388 A1 eine Vorrichtung und ein Verfahren hervor, mittels welcher der Antriebsstrang abhängig von einer Lastanforderung an demselben durch die unterschiedlichen Maschinen des Kraftfahrzeugs vordefiniert angesteuert werden kann.

In einem Hybridelektrofahrzeug kann eine elektrische Maschine in einem Betriebszustand, in welchem die elektrische Maschine im Sinne einer Fahranforderung des Fahrers weder ein positives noch ein negatives Moment zum Antreiben bzw. Beschleunigen oder Bremsen des Hybridelektrofahrzeugs stellen soll, elektrisch neutral oder mechanisch neutral betrieben werden, wobei in diesem Betriebszustand Leerlaufverluste kompensiert werden müssen. Dieser Betriebszustand kann als Leerlaufbetrieb der entsprechenden elektrischen Maschine verstanden werden.

Wird die elektrische Maschine in diesem Betriebszustand mechanisch neutral in einer sogenannten Nullmomentenregelung betrieben, so wird hierfür elektrische Energie benötigt, die durch das System bereitgestellt werden muss. Bei häufiger Anwendung kann dies zu einer übermäßigen Entladung einer Fahrzeugbatterie führen, welche für die benötigte elektrische Energie bereitgestellt ist. Wird die elektrische Maschine elektrisch neutral durch eine sogenannte Nullstromregelung betrieben, so muss die elektrische Maschine für diesen Betriebszustand durch die Brennkraftmaschine geschleppt werden. Dies führt zu einem erhöhten Kraftstoffverbrauch, den es möglichst zu vermeiden gilt.

Aufgabe der vorliegenden Erfindung ist es, der voranstehenden Problematik zumindest teilweise Rechnung zu tragen. Insbesondere ist es Aufgabe der vorliegenden Erfindung, ein Verfahren, ein Computerprogrammprodukt, einen Datenträger mit dem Computerprogrammprodukt sowie ein Hybridelektrofahrzeug zur Verfügung zu stellen, mittels welcher Leerlaufverluste an einer elektrischen Maschine des Hybridelektrofahrzeugs in einem Betriebszustand der elektrischen Maschine, in welchem die elektrische Maschine weder ein positives noch ein negatives Moment stellen soll, sicher und effizient kompensiert werden können.

Die voranstehende Aufgabe wird durch die Patentansprüche gelöst. Insbesondere wird die voranstehende Aufgabe durch das Verfahren gemäß Anspruch 1, das Computerprogrammprodukt gemäß Anspruch 8, den Datenträger gemäß Anspruch 9 sowie das Hybridelektrofahrzeug gemäß Anspruch 10 gelöst. Weitere Vorteile der Erfindung ergeben sich aus den Unteransprüchen, der Beschreibung und den Zeichnungen. Dabei gelten Merkmale, die im Zusammenhang mit dem Verfahren beschrieben sind, selbstverständlich auch im Zusammenhang mit dem erfindungsgemäßen Computerprogrammprodukt, dem erfindungsgemäßen Datenträger, dem erfindungsgemäßen Hybridelektrofahrzeug und jeweils umgekehrt, sodass bezüglich der Offenbarung zu den einzelnen Erfindungsaspekten stets wechselseitig Bezug genommen wird bzw. werden kann.

Gemäß eines ersten Aspekts der vorliegenden Erfindung wird ein Verfahren zum Kompensieren von Leerlaufverlusten an einer ersten Antriebseinheit in einem Hybridelektrofahrzeug mit der ersten Antriebseinheit in Form einer elektrischen Maschine, die für einen Antrieb des Hybridelektrofahrzeugs durch eine Batterie des Hybridelektrofahrzeugs mit Strom versorgt wird, sowie einer zweiten Antriebseinheit in Form einer Brennkraftmaschine, die zum Antreiben des Hybridelektrofahrzeugs mit Kraftstoff aus einem Kraftstofftank des Hybridelektrofahrzeugs versorgt wird, zur Verfügung gestellt. Bei dem Verfahren werden Leerlaufverluste an der ersten Antriebseinheit in einem Leerlaufbetrieb der ersten Antriebseinheit, in welchem die erste Antriebseinheit weder ein positives noch ein negatives Moment stellen soll, abhängig von prädiktiven Streckendaten und Fahrzeugdaten des Hybridelektrofahrzeugs unter Verwendung einer ersten Energiequelle in Form einer Batterie oder einer zweiten Energiequelle in Form des Kraftstoffs aus dem Kraftstofftank unterschiedlich kompensiert.

Im Rahmen der vorliegenden Erfindung wurde festgestellt, dass sich Leerlaufverluste in einem Hybridelektrofahrzeug anhand der prädiktiven Streckendaten und der Fahrzeugdaten besonders sicher und effizient kompensieren lassen. So ist es beispielsweise möglich, die Leerlaufverluste an der ersten Antriebseinheit bzw. an der elektrischen Maschine abhängig von einer Tankfüllung eines Kraftstofftanks für eine Brennkraftmaschine, die als die zweite Antriebseinheit ausgestaltet ist, von einem allgemeinen Betriebszustand der Brennkraftmaschine und von einem Betriebszustands des Antriebsstrangs des Hybridelektrofahrzeugs zu kompensieren.

Durch die adaptive Kompensierung der Leerlaufverluste lassen sich verschiedene Energiespeicher des Hybridelektrofahrzeugs, d.h., beispielsweise der Kraftstofftank und die wenigstens eine Batterie für die elektrische Maschine, sparsam bzw. effizient und sicher nutzen.

Unter der Batterie ist insbesondere eine Leistungsbatterie zur Strom- und/oder Spannungsversorgung der elektrischen Maschine zum Antreiben des Hybridelektrofahrzeugs zu verstehen. Neben dieser elektrischen Maschine kann die Batterie noch weitere elektrische Maschinen mit elektrischer Energie versorgen. Neben der ersten Antriebseinheit bzw. der entsprechenden elektrischen Maschine können auch Leerlaufverluste von weiteren elektrischen Maschinen des Hybridelektrofahrzeugs kompensiert werden.

Bei dem Hybridelektrofahrzeug kann die zweite Antriebseinheit in Form einer Brennkraftmaschine ausgestaltet sein. Das Hybridelektrofahrzeug ist mithin ein Kraftfahrzeug mit wenigstens einer elektrischen Maschine.

Beim unterschiedlichen Kompensieren von Leerlaufverlusten wird die elektrische Maschine elektrisch neutral mittels der Brennkraftmaschine oder mechanisch neutral mittels der Batterie abhängig von den prädiktiven Streckendaten, den Fahrzeugdaten und der verwendeten zweiten Antriebseinheit betrieben. Unter einer unterschiedlichen Kompensation ist vorzugsweise die Kompensation der Leerlaufverluste unter Verwendung unterschiedlicher Energiequellen zu verstehen. Werden beispielsweise erste definierte prädiktive Streckendaten ermittelt, werden die Leerlaufverluste unter Verwendung einer zugehörigen ersten Energiequelle kompensiert. Werden beispielsweise zweite definierte prädiktive Streckendaten ermittelt, die sich von den ersten definierten prädiktiven Streckendaten unterscheiden, werden die Leerlaufverluste unter Verwendung einer zugehörigen zweiten Energiequelle kompensiert. Beim Kompensieren der Leerlaufverluste werden Schleppverluste, die im Leerlaufbetrieb des Hybridelektrofahrzeugs an der ersten Antriebseinheit bestehen, kompensiert.

Unter den Leerlaufverlusten können Drehmomente verstanden werden, welche durch ein erforderliches Schleppen der elektrischen Maschine in einem Betriebszustand, in welchem die elektrische Maschine weder ein positives noch ein negatives Moment stellen soll, entstehen.

Unter prädiktiven Streckendaten können verschiedene Einflussfaktoren verstanden werden, welche im Laufe einer vorhersagbaren Fahrt des Hybridelektrofahrzeugs auf das Hybridelektrofahrzeug wirken können. Solche Einflussfaktoren können Umwelteinflüsse wie Niederschlag, Temperatur oder Luftfeuchtigkeit sein. So kann die elektrische Maschine im Leerlaufzustand abhängig beispielsweise davon unterschiedlich kompensiert werden, ob es schneit, die Sonne scheint, heiß ist, kalt ist, regnet, eine hohe Luftfeuchtigkeit hat, und/oder eine niedrige Luftfeuchtigkeit hat. Unter dem Antreiben des Hybridelektrofahrzeugs ist insbesondere ein Beschleunigen oder Abbremsen des Hybridelektrofahrzeugs zu verstehen.

Die zu berücksichtigen Fahrzeugdaten weisen gemäß einer Weiterbildung der vorliegenden Erfindung vorzugsweise einen Ladezustand der Batterie des Hybridelektrofahrzeugs auf, wobei Leerlaufverluste abhängig vom Ladezustand der Batterie kompensiert werden. Außerdem ist es möglich, dass die prädiktiven Streckendaten ein Höhenprofil einer vorhergesagten Fahrstrecke des Hybridelektrofahrzeugs aufweisen und Leerlaufverluste abhängig vom vorhergesagten Höhenprofil kompensiert werden. Darüber hinaus können die prädiktiven Streckendaten auch ein Geschwindigkeitsprofil des Hybridelektrofahrzeugs aufweisen und Leerlaufverluste können abhängig vom vorhergesagten Geschwindigkeitsprofil des Hybridelektrofahrzeugs kompensiert werden. Basierend auf derartigen Fahrzeug- und Streckendaten, die sich mit einer relativ hohen Wahrscheinlichkeit genau vorhersagen bzw. bestimmen lassen, können die Energieressourcen des Hybridelektrofahrzeugs besonders effizient genutzt werden. Die vorstehend erwähnten Streckendaten lassen sich beispielsweise durch ein Navigationssystem in Verbindung mit einer Wettervorhersagen vorhersagen und für die gewünschte Kompensation der Leerlaufverluste berücksichtigen. Der Ladezustand der Batterie lässt sich durch geeignete Sensoren ermitteln.

Im Rahmen der vorliegenden Erfindung hat sich herausgestellt, dass es bei einem Verfahren von Vorteil sein kann, wenn die Leerlaufverluste in einem Betriebszustand des Hybridelektrofahrzeugs, in welchem sich der Ladezustand der Batterie unter einem definierten Schwellenwert befindet, elektrisch neutral mechanisch mittels der Brennkraftmaschine kompensiert werden. Bei einer elektrisch neutralen Kompensation werden Verlustmomente in der Drehmomentenstruktur einkoordiniert und die elektrische Maschine wird so betrieben, dass kein Strom fließt. Leerlaufmomente werden in diesem Fall durch die Brennkraftmaschine mit einem Zusatzdrehmoment kompensiert. D.h., bei einer elektrisch neutralen sowie mechanischen Kompensation kann die elektrische Maschine als Generator betrieben werden. Dabei wird das Generatormoment so gewählt, dass der erzeugte Strom gemäß einer Nullstromregelung gleich Null ist. Die Momentenanforderung an die Brennkraftmaschine setzt sich vorzugsweise aus dem Fahrerwunschmoment und dem Generatormoment des Elektromotors, welches den Verhalten der Lastpunktanhebung entspricht, zusammen. Auf diese Weise werden die Verluste durch die Brennkraftmaschine elektrisch neutral mechanisch kompensiert. Dadurch kann verhindert werden, dass sich die Batterie zu tief entlädt und dadurch nicht mehr ausreichend elektrische Energie verfügbar ist, um das Hybridelektrofahrzeug später mittels der elektrischen Maschine anzutreiben. Außerdem kann dadurch eine Tiefenentladung oder zumindest eine zu häufig auftretende Tiefenentladung der Batterie vermieden werden. Durch die erfindungsgemäße Kompensation der Leerlaufverluste bzw. eine entsprechende Berücksichtigung der Kompensationsmomente bei einer Berechnung des Fahrerwunschmomentes kann ein Nachjustieren der Fahrpedalposition durch den Fahrer vermieden werden, was zu einem angenehmeren Fahrpedalgefühl führt.

Bei einem Verfahren gemäß der vorliegenden Erfindung ist es weiterhin möglich, dass die Leerlaufverluste in einem Betriebszustand, in welchem fließender Verkehr und/oder eine ebene oder im Wesentlichen ebene Fahrstrecke vorhergesagt werden, elektrisch neutral mechanisch mittels der Brennkraftmaschine kompensiert werden. D.h., wird festgestellt, dass sich das Hybridelektrofahrzeug voraussichtlich beispielsweise auf der Autobahn oder einer Schnellstraße mit wenig Verkehr, beispielsweise nachts zwischen 20 Uhr und 6 Uhr morgens, bewegt, kann davon ausgegangen werden, dass es kaum Gelegenheiten geben wird, Bremsenergie zu gewinnen. Für Fahrstrecken mit einem geringen Rekuperationsanteil (Bremsenergie pro Kilometer) ist aus den vorstehend genannten Gründen die elektrisch neutrale Kompensation von Vorteil.

Ferner ist es möglich, dass bei einem erfindungsgemäßen Verfahren die Leerlaufverluste in einem Betriebszustand des Hybridelektrofahrzeugs, in welchem sich der Ladezustand der Batterie über einem definierten Schwellenwert befindet, mechanisch neutral elektrisch mittels der Batterie kompensiert werden. Bei einer mechanisch neutralen Kompensation ist das Sollmoment der elektrischen Maschine gleich Null und die Kompensation der Leerlaufmomente wird elektrisch mittels elektrischer Energie aus der wenigstens einen Batterie durchgeführt. Energie aus einer Rekuperation ist günstiger als Energie aus einer Lastpunktverschiebung bzw. Energie, die durch Verbrennung von Kraftstoff aus einem Kraftstofftank des Hybridelektrofahrzeugs durch die Brennkraftmaschine umgewandelt wird. Durch gezielte Verwendung der mechanisch neutralen Kompensation kann das Hybridelektrofahrzeug mithin besonders effizient betrieben werden.

Von weiterem Vorteil kann es sein, wenn bei einem erfindungsgemäßen Verfahren die Leerlaufmomente in einem Betriebszustand des Hybridelektrofahrzeugs, in welchem zäher Verkehr, Stop & Go, und/oder eine hügelige Strecke vorhergesagt werden, mechanisch neutral elektrisch mittels der Batterie kompensiert werden. D.h., unter Berücksichtigung einer prädiktiven Streckenführung, beispielsweise mittels Navigationssystem, kann vorhergesagt werden, zu welchen Zeitpunkten wieder Bremsenergie gewonnen werden kann. Das ist beispielsweise dann der Fall, wenn die Fahrstrecke viele Abschnitte mit Bergabfahrten enthält oder es sich um eine innerstädtische Strecke mit vielen Ampeln handelt. Für Fahrstrecken mit einem hohen Rekuperationsanteil (Bremsenergie pro Kilometer) ist aus den vorstehend genannten Gründen die mechanisch neutrale Kompensation von Vorteil.

Gemäß eines weiteren Aspekts der vorliegenden Erfindung wird ein Computerprogrammprodukt zur Verfügung gestellt, das auf einem Datenträger gespeichert ist und zum Ausführen eines wie vorstehend im Detail beschriebenen Verfahrens ausgestaltet ist. Damit bringt das erfindungsgemäße Computerprogrammprodukt die gleichen Vorteile mit sich, wie sie ausführlich mit Bezug auf die erfindungsgemäße Vorrichtung beschrieben worden sind. Das Computerprogrammprodukt kann als computerlesbarer Anweisungscode in jeder geeigneten Programmiersprache wie beispielsweise in JAVA, C++, etc. implementiert sein. Das Computerprogrammprodukt kann auf einem computerlesbaren Speichermedium (Datendisk, Wechsellaufwerk, flüchtiger oder nichtflüchtiger Speicher, eingebauter Speicher/Prozessor, etc.) abgespeichert sein. Der Anweisungscode kann einen Computer oder andere programmierbare Geräte wie ein Steuergerät für ein Hybridelektrofahrzeug derart programmieren, dass die gewünschten Funktionen ausgeführt werden. Ferner kann das Computerprogrammprodukt in einem Netzwerk wie beispielsweise dem Internet bereitgestellt werden bzw. sein, von dem es bei Bedarf von einem Nutzer herunter geladen werden kann. Das Computerprogrammprodukt kann sowohl mittels eines Computerprogramms, d.h. einer Software, als auch mittels einer oder mehrerer spezieller elektronischer Schaltungen, d.h. in Hardware, oder in beliebig hybrider Form, d.h. mittels Software-Komponenten und Hardware-Komponenten, realisiert werden bzw. sein.

Gemäß eines weiteren Aspekts der vorliegenden Erfindung wird ein Datenträger mit einem darauf gespeicherten Computerprogrammprodukt, wie es vorstehend beschrieben wurde, bereitgestellt. Damit bringt der erfindungsgemäße Datenträger auch die Vorteile mit sich, wie sie vorstehend beschrieben worden sind.

Im Rahmen der vorliegenden Erfindung wird außerdem ein Hybridelektrofahrzeug mit einer Antriebseinheit in Form einer elektrischen Maschine, die für einen Antrieb des Hybridelektrofahrzeugs durch eine Batterie des Hybridelektrofahrzeugs mit Strom versorgt wird, sowie einer zweiten Antriebseinheit in Form einer Brennkraftmaschine, die zum Antreiben des Hybridelektrofahrzeugs mit Kraftstoff aus einem Kraftstofftank des Hybridelektrofahrzeugs versorgt wird, zur Verfügung gestellt, wobei in dem Hybridelektrofahrzeug ein wie vorstehend beschriebenes Computerprogrammprodukt gespeichert und konfiguriert ist, in einem Leerlaufbetreib der ersten Antriebseinheit, in welchem die erste Antriebseinheit weder ein positives noch ein negatives Moment stellen soll, Leerlaufverluste an der ersten Antriebseinheit abhängig von prädiktiven Streckendaten und Fahrzeugdaten des Hybridelektrofahrzeugs gemäß eines wie vorstehend im Detail beschriebenen Verfahrens unterschiedlich zu kompensieren. Damit bringt auch das erfindungsgemäße Hybridelektrofahrzeug die gleichen Vorteile mit sich, wie sie ausführlich mit Bezug auf das erfindungsgemäße Verfahren beschrieben worden sind.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder der Zeichnung hervorgehende Merkmale und/oder Vorteile, einschließlich konstruktiver Einzelheiten und räumlicher Anordnungen können sowohl für sich als auch in den verschiedenen Kombinationen erfindungswesentlich sein. Es zeigen jeweils schematisch:
- Figur 1: ein Hybridelektrofahrzeug mit einem darin gespeicherten Computerprogrammprodukt gemäß einer ersten Ausführungsform der vorliegenden Erfindung,
- Figur 2: einen Datenträger mit einem darauf gespeicherten Computerprogrammprodukt gemäß einer Ausführungsform der vorliegenden Erfindung, und
- Figur 3: ein Flussdiagramm zum Erläutern eines Verfahrens gemäß einer Ausführungsform der vorliegenden Erfindung.

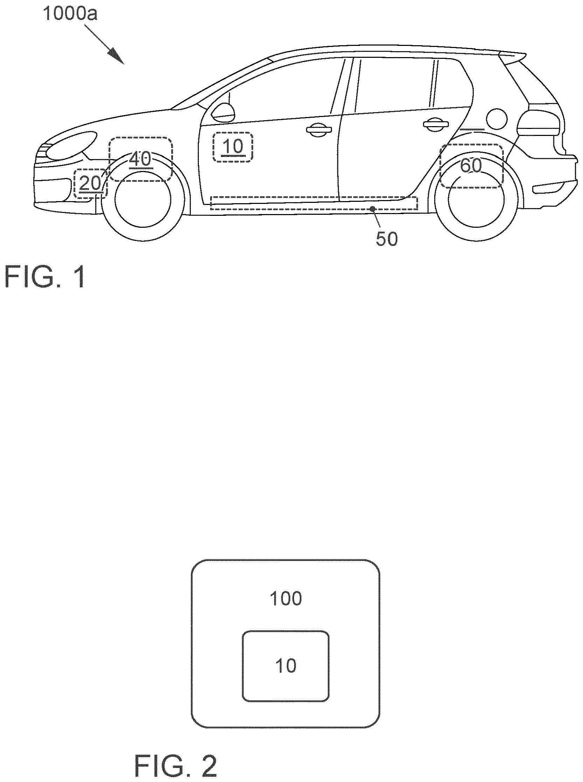

Elemente mit gleicher Funktion und Wirkungsweise sind in den Figuren 1 bis 3 jeweils mit denselben Bezugszeichen versehen.

Fig. 1 zeigt ein Hybridelektrofahrzeug 1000a mit einer ersten Antriebseinheit 20 in Form einer elektrischen Maschine. Die elektrische Maschine wird für einen Antrieb des Hybridelektrofahrzeugs 1000a durch eine Batterie 50 des Hybridelektrofahrzeugs 1000a bestromt bzw. mit Strom und Spannung versorgt. Das Hybridelektrofahrzeug 1000a weist außerdem eine zweite Antriebseinheit 40 in Form einer Brennkraftmaschine auf, die mit Kraftstoff aus einem Kraftstofftank 60 des Hybridelektrofahrzeugs 1000a versorgt wird. Darüber hinaus ist in dem Hybridelektrofahrzeug 1000a ein Computerprogrammprodukt 10 gespeichert und konfiguriert, in einem Leerlaufbetrieb der elektrischen Maschine, in welchem die elektrische Maschine weder ein positives noch ein negatives Moment stellen soll, Leerlaufverluste dieser elektrischen Maschine abhängig von prädiktiven Streckendaten und/oder Fahrzeugdaten des Hybridelektrofahrzeugs 1000a unterschiedlich zu kompensieren.

In Fig. 2 ist ein Datenträger 100 mit einem darauf gespeicherten Computerprogrammprodukt 10 dargestellt. Der Datenträger 100 ist in Form einer Speicherkarte ausgestaltet.

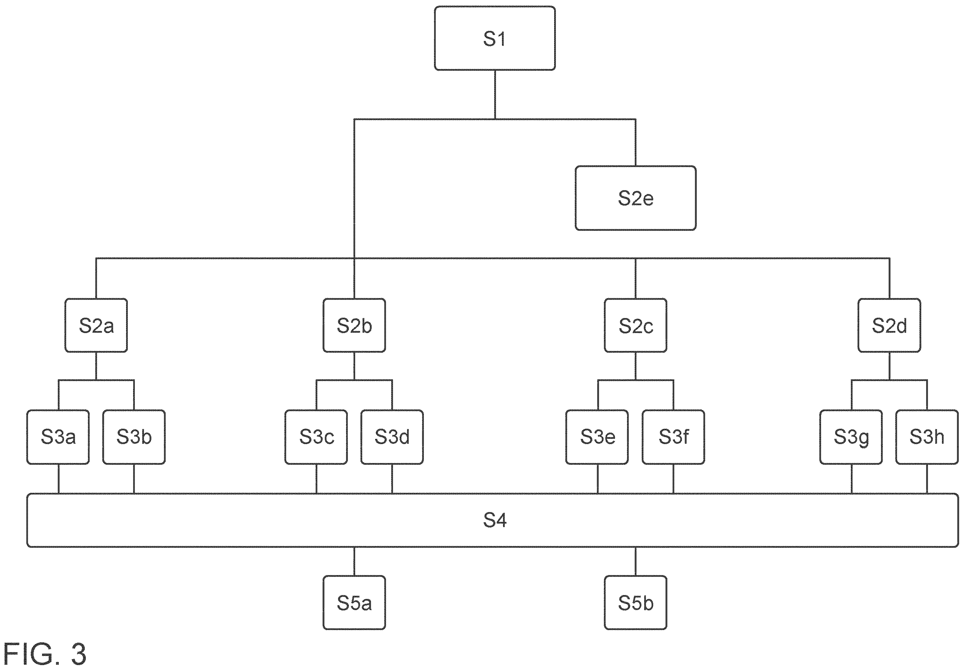

Mit Bezug auf Fig. 3 wird anschließend ein Verfahren zum Kompensieren von Leerlaufverlusten an der ersten Antriebseinheit 20 in dem in Fig. 1 dargestellten Hybridelektrofahrzeug 1000a erläutert.

In einem ersten Schritt S1 wird ein Betriebszustand der ersten Antriebseinheit 20 bzw. der elektrischen Maschine ermittelt. Wenn hierbei festgestellt wird, dass sich die elektrische Maschine in einem Zustand befindet, in welchem die elektrische Maschine ein positives oder ein negatives Moment stellen soll, wird zu Schritt S2e vorangeschritten und das Verfahren kann beendet werden.

Wird in Schritt S1 festgestellt, dass sich die elektrische Maschine in einem Zustand befindet, in welchem die elektrische Maschine weder ein positives noch ein negatives Moment stellen soll, wird zu einem der Schritte 2a bis 2d vorangeschritten.

In Schritt S2a wird ein Höhenprofil einer vorhergesagten Fahrstrecke des Hybridelektrofahrzeugs 1000a ermittelt. Wird hierbei festgestellt, dass sich das Fahrzeug auf einer ebenen oder im Wesentlichen ebenen Strecke bewegen wird, schreitet das Verfahren zu Schritt S3a voran. In Schritt S3a werden die Leerlaufverluste vorzugsweise elektrisch neutral mittels der Brennkraftmaschine kompensiert. Voraussetzung hierfür kann jedoch sein, dass ein Kraftstofftank 60 des Hybridelektrofahrzeugs 1000a noch ausreichend gefüllt ist oder zumindest stärker gefüllt ist als die Batterie 50 geladen ist. Hierbei können die unterschiedlichen Energiedichten von Kraftstoff und beispielsweise einer Lithium-Ionen-Batterie berücksichtigt werden. Diesbezüglich können ein Abgleich der beiden Energiespeicher und eine entsprechende Bewertung des Abgleichs in einer nachfolgenden optionalen Priorisierung gemäß Schritt S4 durchgeführt werden. Anschließend können die Leerlaufverluste gemäß Schritt S5a elektrisch neutral oder gemäß Schritt S5b mechanisch neutral kompensiert werden.

Wird in Schritt S2a festgestellt, dass sich das Hybridelektrofahrzeug 1000a auf einer hügeligen oder bergigen Strecke bewegen wird, schreitet das Verfahren zu Schritt S3b voran. In Schritt S3b werden die Leerlaufverluste mechanisch neutral mittels der Batterie 50 kompensiert. Voraussetzung hierfür ist vorzugsweise, dass ein Ladezustand der Batterie 50 noch ausreichend hoch ist oder zumindest höher ist als eine entsprechende Kraftstofffüllung im Kraftstofftank 60 des Hybridelektrofahrzeugs 1000a. Diesbezüglich können ein Abgleich der beiden Energiespeicher und eine entsprechende Bewertung des Abgleichs in der nachfolgenden optionalen Priorisierung gemäß Schritt S4 durchgeführt werden. Anschließend können die Leerlaufverluste gemäß Schritt S5a elektrisch neutral oder gemäß Schritt S5b mechanisch neutral kompensiert werden.

In Schritt S2b wird ein Geschwindigkeitsprofil auf einer vorhergesagten Fahrstrecke des Hybridelektrofahrzeugs 1000a ermittelt. Wird hierbei festgestellt, dass sich das Hybridelektrofahrzeug 1000a auf einer wenig befahrenen Autobahn oder Schnellstraße bewegen wird, schreitet das Verfahren zu Schritt S3c voran. In Schritt S3c werden die Verlustmomente elektrisch neutral mittels der Brennkraftmaschine kompensiert. Voraussetzung hierfür ist vorzugsweise, dass der Kraftstofftank 60 des Hybridelektrofahrzeugs 1000a, wie bereits vorstehend beschrieben, noch ausreichend gefüllt ist oder zumindest stärker gefüllt ist als die Batterie 50 geladen ist. Diesbezüglich können ein Abgleich der beiden Energiespeicher und eine entsprechende Bewertung des Abgleichs in der nachfolgenden optionalen Priorisierung gemäß Schritt S4 durchgeführt werden. Anschließend können die Leerlaufverluste gemäß Schritt S5a elektrisch neutral oder gemäß Schritt S5b mechanisch neutral kompensiert werden.

Wird in Schritt S2b festgestellt, dass sich das Hybridelektrofahrzeug 1000a im Stop & Go Verkehr oder in einem zähfließenden Verkehr, beispielsweise in der Rush Hour, bewegen wird, schreitet das Verfahren zu Schritt S3d voran. In Schritt S3d werden die Leerlaufverluste mechanisch neutral mittels der Batterie 50 kompensiert. Voraussetzung hierfür ist vorzugsweise, dass ein Ladezustand der Batterie 50 noch ausreichend hoch ist oder zumindest höher ist als eine entsprechende Kraftstofffüllung im Kraftstofftank 60 des Hybridelektrofahrzeugs 1000a. Diesbezüglich können ein Abgleich der beiden Energiespeicher und eine entsprechende Bewertung des Abgleichs in der nachfolgenden optionalen Priorisierung gemäß Schritt S4 durchgeführt werden. Anschließend können die Leerlaufverluste gemäß Schritt S5a elektrisch neutral oder gemäß Schritt S5b mechanisch neutral kompensiert werden.

In Schritt S2c wird ein Ladezustand der Batterie 50 ermittelt. Wird hierbei festgestellt, dass sich der Ladezustand unterhalb eines vordefinierten Schwellenwerts befindet, schreitet das Verfahren zu Schritt S3e voran. In Schritt S3e werden die Leerlaufverluste vorzugsweise elektrisch neutral mittels der Brennkraftmaschine kompensiert. Ergänzend können hierzu ein Abgleich zwischen einem Ladezustand der Batterie 50 und einem Befüllungszustand des Kraftstofftanks 60 durchgeführt werden und eine entsprechende Bewertung des Abgleichs in der nachfolgenden optionalen Priorisierung gemäß Schritt S4 durchgeführt werden. Abhängig von der Bewertung des Abgleichs kann die elektrisch neutrale Kompensation in diesem Fall ggf. nur unter Berücksichtigung des Befüllungszustands des Kraftstofftanks 60 durchgeführt werden. Ist beispielsweise kaum noch Kraftstoff im Kraftstofftank 60, der Ladezustand der Batterie 50 hingegen noch ausreichend hoch, wird die Kompensation bevorzugt mechanisch neutral durchgeführt. D.h., nach der Priorisierung gemäß Schritt S4 werden die Leerlaufverluste gemäß Schritt S5a elektrisch neutral oder gemäß Schritt S5b mechanisch neutral kompensiert.

Wird in Schritt S2c festgestellt, dass sich der Ladezustand auf oder über dem vordefinierten Schwellenwert befindet, schreitet das Verfahren zu Schritt S3f voran. In Schritt S3f werden die Leerlaufverluste verzugsweise mechanisch neutral mittels der Batterie 50 kompensiert.

In Schritt S2d wird ein Befüllungszustand des Kraftstofftanks 60 des Hybridelektrofahrzeugs 1000a ermittelt. Wird hierbei festgestellt, dass sich der Befüllungszustand unterhalb eines vordefinierten Schwellenwerts befindet, schreitet das Verfahren zu Schritt S3g voran. In Schritt S3g werden die Leerlaufverluste vorzugsweise mechanisch neutral mittels der Batterie 50 kompensiert. Ergänzend können hierzu ein Abgleich zwischen einem Ladezustand der Batterie 50 und einem Befüllungszustand des Kraftstofftanks 60 durchgeführt werden und eine entsprechende Bewertung des Abgleichs in der nachfolgenden optionalen Priorisierung gemäß Schritt S4 durchgeführt werden. Abhängig von der Bewertung des Abgleichs kann die elektrisch neutrale Kompensation in diesem Fall ggf. nur unter Berücksichtigung des Ladezustands der Batterie 50 durchgeführt werden. Ist beispielsweise noch ausreichend Kraftstoff im Kraftstofftank 60, der Ladezustand der Batterie hingegen relativ niedrig, wird die Kompensation bevorzugt elektrisch neutral durchgeführt. D.h., nach der Priorisierung gemäß Schritt S4 werden die Leerlaufverluste gemäß Schritt S5a elektrisch neutral oder gemäß Schritt S5b mechanisch neutral kompensiert.

Wird in Schritt S2d festgestellt, dass sich der Befüllungszustand des Kraftstofftanks 60 auf oder über dem vordefinierten Schwellenwert befindet und sich der Ladezustand der Batterie 50 unter dem vordefinierten Schwellenwert befindet, schreitet das Verfahren zu Schritt S3h voran. In Schritt S3h werden die Leerlaufverluste vorzugsweise elektrisch neutral kompensiert.

Die Priorisierung gemäß Schritt S4 kann bezüglich der Schritte S2a bis S2d bzw. S3a bis S3h übergreifend durchgeführt werden, um hierdurch zu ermitteln, ob die Leerlaufverluste gemäß Schritt S5a elektrisch neutral oder gemäß Schritt S5b mechanisch neutral kompensiert werden sollen. Die vorstehend beispielhaft dargestellten Abwägungsszenarien sollen dabei nicht abschließend oder die vorliegende Erfindung beschränkend betrachtet werden. Die Verfahrensschritte S2a bis S2d sowie S3a bis S3h können seriell und/oder parallel durchgeführt werden.

Zusätzlich oder alternativ zu den erläuterten prädiktiven Streckendaten, dem Ladezustand der Batterie und/oder dem Befüllungszustand der Brennkraftmaschine lassen sich noch weitere Einflussfaktoren, einzeln für sich betrachtet oder kombiniert bzw. in Zusammenhang miteinander betrachtet, verwenden, abhängig von welchen die Leerlaufverluste kompensiert werden können.

### Bezugszeichenliste

- 10: Computerprogrammprodukt
- 20: erste Antriebseinheit (elektrische Maschine)
- 30: zweite Antriebseinheit (weitere elektrische Maschine)
- 40: zweite Antriebseinheit (Brennkraftmaschine)
- 50: Batterie
- 60: Kraftstofftank

- 100: Datenträger

- 1000a: Hybridelektrofahrzeug

## Patentansprüche

1. Verfahren zum Kompensieren von Leerlaufverlusten an einer ersten Antriebseinheit (20) in einem Hybridelektrofahrzeug (1000a) mit der ersten Antriebseinheit (20) in Form einer elektrischen Maschine, die für einen Antrieb des Hybridelektrofahrzeugs (1000a) durch eine Batterie (50) des Hybridelektrofahrzeugs (1000a) mit Strom versorgt wird, sowie einer zweiten Antriebseinheit (40) in Form einer Brennkraftmaschine (40), die zum Antreiben des Hybridelektrofahrzeugs (1000a) mit Kraftstoff aus einem Kraftstofftank (60) des Hybridelektrofahrzeugs (1000a) versorgt wird,
**dadurch gekennzeichnet,**
**dass** die Leerlaufverluste an der ersten Antriebseinheit (20) in einem Leerlaufbetrieb der ersten Antriebseinheit (20), in welchem die erste Antriebseinheit (20) weder ein positives noch ein negatives Moment stellen soll, abhängig von prädiktiven Streckendaten und Fahrzeugdaten des Hybridelektrofahrzeugs (1000a) unter Verwendung einer ersten Energiequelle in Form einer Batterie (50) oder einer zweiten Energiequelle in Form des Kraftstoffs aus dem Kraftstofftank (60),unterschiedlich kompensiert werden.

2. Verfahren nach Anspruch 1,
**dadurch gekennzeichnet,**
**dass** die prädiktiven Fahrzeugdaten einen Ladezustand der Batterie (50) des Hybridelektrofahrzeugs (1000a) aufweisen und die Leerlaufverluste abhängig vom Ladezustand der Batterie (50) kompensiert werden.

3. Verfahren nach einem der voranstehenden Ansprüche,
**dadurch gekennzeichnet,**
**dass** die Streckendaten ein Höhenprofil einer vorhergesagten Fahrstrecke des Hybridelektrofahrzeugs (1000a) und/oder ein Geschwindigkeitsprofil des Hybridelektrofahrzeugs (1000a) aufweisen und die Leerlaufverluste abhängig vom vorhergesagten Höhenprofil und/oder abhängig vom vorhergesagten Geschwindigkeitsprofil kompensiert werden.

4. Verfahren nach einem der voranstehenden Ansprüche,
**dadurch gekennzeichnet,**
**dass** die Leerlaufverluste in einem Betriebszustand des Hybridelektrofahrzeugs (1000a), in welchem sich der Ladezustand der Batterie (50) unter einem definierten Schwellenwert befindet, elektrisch neutral mechanisch mittels der Brennkraftmaschine kompensiert werden.

5. Verfahren nach einem der voranstehenden Ansprüche,
**dadurch gekennzeichnet,**
**dass** die Leerlaufverluste in einem Betriebszustand des Hybridelektrofahrzeugs (1000a), in welchem fließender Verkehr und/oder eine ebene oder im Wesentlichen ebene Fahrstrecke vorhergesagt werden, elektrisch neutral mechanisch mittels der Brennkraftmaschine kompensiert werden.

6. Verfahren nach einem der voranstehenden Ansprüche,
**dadurch gekennzeichnet,**
**dass** die Leerlaufverluste in einem Betriebszustand des Hybridelektrofahrzeugs (1000a), in welchem sich der Ladezustand der Batterie (50) über einem definierten Schwellenwert befindet, mechanisch neutral elektrisch mittels der Batterie (50) kompensiert werden.

7. Verfahren nach einem der voranstehenden Ansprüche,
**dadurch gekennzeichnet,**
**dass** die Leerlaufverluste in einem Betriebszustand des Hybridelektrofahrzeugs (1000a), in welchem zäher Verkehr, Stop & Go, und/oder eine hügelige Strecke vorhergesagt werden, mechanisch neutral elektrisch mittels der Batterie (50) kompensiert werden.

8. Computerprogrammprodukt (10), das auf einem Datenträger (100) gespeichert ist und zum Ausführen eines Verfahrens nach einem der voranstehenden Ansprüche ausgestaltet ist.

9. Datenträger (100) mit einem darauf gespeicherten Computerprogrammprodukt (10) nach Anspruch 8.

10. Hybridelektrofahrzeug (1000a) mit einer ersten Antriebseinheit in Form einer elektrischen Maschine (20), die für einen Antrieb des Hybridelektrofahrzeugs (1000a) durch eine Batterie (50) des Hybridelektrofahrzeugs (1000a) mit Strom versorgt wird, sowie einer zweiten Antriebseinheit (2) in Form einer Brennkraftmaschine (40), die zum Antreiben des Hybridelektrofahrzeugs (1000a) mit Kraftstoff aus einem Kraftstofftank (60) des Hybridelektrofahrzeugs (1000a) versorgt wird, in welchem ein Computerprogrammprodukt (10) nach Anspruch 9 gespeichert und konfiguriert ist, in einem Leerlaufbetrieb der ersten Antriebseinheit, in welchem die erste Antriebseinheit weder ein positives noch ein negatives Moment stellen soll, Leerlaufverluste an der ersten Antriebseinheit (20) abhängig von prädiktiven Streckendaten und Fahrzeugdaten des Hybridelektrofahrzeugs (1000a) gemäß einem Verfahren nach einem der Ansprüche 1 bis 7 unterschiedlich zu kompensieren.
